(19) Europäisches Patentamt
European Patent Office
Office européen des brevets

(11) EP 3 615 602 B1

(12) **EUROPEAN PATENT SPECIFICATION**

(45) Date of publication and mention of the grant of the patent:
**06.09.2023 Bulletin 2023/36**

(21) Application number: **18724332.4**

(22) Date of filing: **25.04.2018**

(51) International Patent Classification (IPC):
***C08K 5/42*** *(2006.01)* ***C08K 7/14*** *(2006.01)*
***C08K 9/06*** *(2006.01)*

(52) Cooperative Patent Classification (CPC):
(C-Sets available)
**C08K 5/42; C08K 7/14; C08K 9/06** (Cont.)

(86) International application number:
**PCT/IB2018/052874**

(87) International publication number:
**WO 2018/198045 (01.11.2018 Gazette 2018/44)**

(54) **NON-BROMINE, NON-CHLORINE FLAME RETARDANT, GLASS AND TALC FILLED POLYCARBONATE WITH IMPROVED IMPACT STRENGTH**

BROM- UND CHLORFREIES FLAMMSCHUTZMITTEL, GLAS UND TALKGEFÜLLTES POLYCARBONAT MIT VERBESSERTER SCHLAGFESTIGKEIT

POLYCARBONATE COMPRENANT UN RETARDATEUR DE FLAMME SANS BROME ET SANS CHLORE, DU VERRE ET DU TALC PRÉSENTANT UNE RÉSISTANCE AUX CHOCS AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2017 US 201762489514 P**

(43) Date of publication of application:
**04.03.2020 Bulletin 2020/10**

(73) Proprietor: **SABIC Global Technologies B.V.**
**4612 PX Bergen op Zoom (NL)**

(72) Inventor: **GRCEV, Snezana**
**4615 NE Bergen op Zoom (NL)**

(74) Representative: **Algemeen Octrooi- en Merkenbureau B.V.**
**P.O. Box 645**
**5600 AP Eindhoven (NL)**

(56) References cited:
**US-A1- 2009 111 943**
**US-A1- 2013 131 241**
**US-A1- 2014 200 303**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/42, C08L 69/00;**
**C08K 7/14, C08L 69/00;**
**C08K 9/06, C08L 69/00**

## Description

### TECHNICAL FIELD

The disclosure concerns glass filled polycarbonate compositions having surface-modified mineral fillers and non-brominated and/or chlorinated flame retardant additives and that exhibit improved impact strength.

### BACKGROUND

Polycarbonate polymers are useful in a number of material applications have an array of advantageous physical properties and mechanical properties including, for example, high impact strength, excellent dimensional stability, glass-like transparency, excellent thermal resistance, and low-temperature toughness. Polycarbonate materials are often processed with other materials to improve their physical performance. Fillers and others reinforcing additives may be introduced to a polycarbonate polymer matrix to enhance properties such as modulus and impact strength. Flame retardants, drip suppressants, mineral fillers, and char formers are functional additives which can be used to help compositions limit the effects of heat or flame from melting or even burning. Ideally, these flame retardant polycarbonate materials exhibit both robust flame retardance and thin walled resilience. Industry standards increasingly require that the flame retardant is free of halogen, particularly bromine. US 2013/0131241 discloses a flame retardant thermoplastic composition, comprising at least one polycarbonate polymer, at least 0.05 weight percent of a flame retardant additive, glass fibers, talc and an acid stabilizer, and wherein the thermoplastic composition has a melt volume rate (MVR) of at least 4 cc/10 min when measured according to ISO 1133 at 300 °C and a 1.2 kg load, and a flexural modulus of at least 3.0 GPa when measured according to ISO 178; and wherein an article molded from the thermoplastic composition can attain UL94 V0 performance at a thickness of 1.2mm. US 2009/0111943 discloses a thermoplastic composition comprising, based on the total weight of the thermoplastic composition, from 0.1 to 30 weight percent of an inorganic filler composition comprising an inorganic filler-polyorganosiloxane composite; up to 80 weight percent of a polycarbonate; and from 1 to 25 weight percent of an impact modifier. US 2014/0200303 discloses a blended polycarbonate composition with improved surface characteristics comprising (a) from about 65 wt% to about 94 wt% of a polycarbonate component comprising a polycarbonate polymer, a poly( carbonate-siloxane) copolymer, or a combination thereof, (b) from about 1 wt% to about 20 wt% of a splay-reducing component and ( c) from about 5 wt % to about 25 wt % of a filler component, wherein all weight percent values are based on the total weight of the composition and wherein the composition exhibits a splay less than that of that of a reference composition consisting essentially of substantially the same proportions of the same polycarbonate component and the same filler component. There remains a need in the art for polycarbonate compositions that exhibit good processability and thin wall flame retardancy, while also maintaining impact strength.

### SUMMARY

The present invention relates to filled thermoplastic compositions as defined in claim 1 with preferred embodiments thereof laid down in the dependent claims..

Furthermore, this disclosure relates to a method of forming such compositions.

In another aspect, the disclosure concerns an article prepared according to the methods of forming a composition as disclosed herein or an article formed from the compositions disclosed herein.

### DETAILED DESCRIPTION

Polycarbonate materials are often processed with other materials to improve their physical performance. Flame retardant additives may be included so that the polycarbonate resists flames making the material more useful for certain applications. Demand for non-brominated and non-chlorinated flame retardant additives has increased because these additives avoid release of certain halogenated chemicals when the matrix polymer is under environmental stresses that may cause degradation, melting, or burning. However, the addition of fillers and flame retardant additives to polycarbonate compositions may negatively affect impact performance and other mechanical properties. Filler reinforced polycarbonate compositions, also having robust flame-retardant properties, thus present significant technical challenges in discovering compositions that can maintain the appropriate balance of flow, thin wall flame retardancy, and impact strength. Combinations of mineral fillers, such as talc and glass fibers have been introduced into polymer systems to improve mechanical strength and other properties. Synergistic effects among glass fiber, talc, and stabilizers have been found to provide compositions having thin-walled flame retardant performance. Compositions of the present disclosure expound upon this synergy. Presented herein are surface-coated mineral fillers that combine with non-bonding glass fiber and certain phosphorus based stabilizers to provide thin-walled flame retardant compositions having improved impact strength both multi-axial impact strength and notched Izod impact strength. The present disclosure provides glass and mineral filled

polycarbonate compositions exhibiting flame resistance even at small wall thicknesses and improved multi-axial impact strength.

**POLYCARBONATE POLYMER**

In an aspect, the disclosed compositions may comprise a polycarbonate polymer component comprising one or more polycarbonate polymers. As used herein, the term "polycarbonate" includes homopolycarbonates and copolycarbonates have repeating structural carbonate units. In one aspect, a polycarbonate can comprise any polycarbonate material or mixture of materials, for example, as recited in U.S. Patent No. 7,786,246.

The terms "polycarbonate" or "polycarbonates" as used herein include copolycarbonates, homopolycarbonates, (co)polyester carbonates and combinations thereof.

In various aspects, the polycarbonate may comprise copolymers comprising two or more distinct carbonate units. For example, a polycarbonate copolymer may comprise repeating carbonate units derived from bisphenol acetophenone (BisAP) and a second, chemically distinct dihydroxy monomer such as a bisphenol, e.g. bisphenol A. Alternatively, a polycarbonate copolymer can comprise repeating carbonate units derived from (N-Phenyl Phenolphthalein) PPPBP and a second, chemically distinct dihydroxy monomer such as a bisphenol, e.g. bisphenol A.

In one aspect, the polycarbonate can comprises aromatic carbonate chain units and includes compositions having structural units of the formula (I):

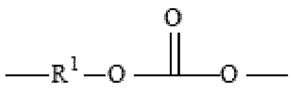

(I)

in which the $R^1$ groups are aromatic, aliphatic or alicyclic radicals. Beneficially, $R^1$ is an aromatic organic radical and, in an alternative aspect, a radical of the formula (II):

$$-A^1-Y^1-A^2- \qquad (II)$$

wherein each of $A^1$ and $A^2$ is a monocyclic divalent aryl radical and $Y^1$ is a bridging radical having zero, one, or two atoms which separate $A^1$ from $A^2$. In an exemplary aspect, one atom separates $A^1$ from $A^2$. Illustrative examples of radicals of this type are -O-, -S-, -S(O)-, $-S(O_2)-$, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another aspect, zero atoms separate $A^1$ from $A^2$, with an illustrative example being bisphenol. The bridging radical $Y^1$ can be a hydrocarbon group or a saturated hydrocarbon group such as methylene, cyclohexylidene or isopropylidene.

Polycarbonates can be produced by the interfacial reaction polymer precursors such as dihydroxy compounds in which only one atom separates $A^1$ and $A^2$. As used herein, the term "dihydroxy compound" includes, for example, bisphenol compounds having general formula (III) as follows:

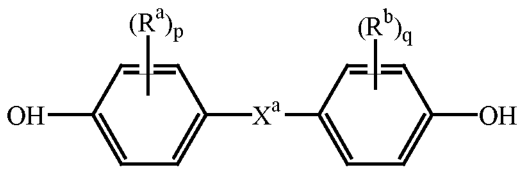

(III)

wherein $R^a$ and $R^b$ each independently represent hydrogen, a halogen atom, or a monovalent hydrocarbon group; p and q are each independently integers from 0 to 4; and $X^a$ represents one of the groups of formula (IV):

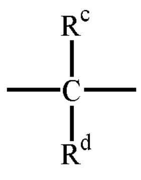

or

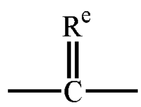

(IV)

wherein $R^c$ and $R^d$ each independently represent a hydrogen atom or a monovalent linear or cyclic hydrocarbon group,

and $R^e$ is a divalent hydrocarbon group.

Non-limiting examples of the types of bisphenol compounds that can be represented by formula (IV) can include the bis(hydroxyaryl)alkane series such as, 1,1-bis(4-hydroxyphenyl)methane, 1,1-bis(4-hydroxyphenyl)ethane, 2,2-bis(4-hydroxyphenyl)propane (or bisphenol-A), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, bis(4-hydroxyphenyl)phenylmethane, 2,2-bis(4-hydroxy-1-methylphenyl)propane, 1,1-bis(4-hydroxy-t-butylphenyl)propane, 2,2-bis(4-hydroxy-3-bromophenyl)propane, or the like; bis(hydroxyaryl)cycloalkane series such as, 1,1-bis(4-hydroxyphenyl)cyclopentane, 1,1-bis(4-hydroxyphenyl)cyclohexane, or the like, or combinations including at least one of the foregoing bisphenol compounds.

Other bisphenol compounds that can be represented by formula (III) include those where X is -O-, -S-, -SO- or $-SO_2-$. Some examples of such bisphenol compounds are bis(hydroxyaryl)ethers such as 4,4'-dihydroxy diphenylether, 4,4'-dihydroxy-3,3'-dimethylphenyl ether, or the like; bis(hydroxy diaryl)sulfides, such as 4,4'-dihydroxy diphenyl sulfide, 4,4'-dihydroxy-3,3'-dimethyl diphenyl sulfide, or the like; bis(hydroxy diaryl) sulfoxides, such as, 4,4'-dihydroxy diphenyl sulfoxides, 4,4'-dihydroxy-3,3'-dimethyl diphenyl sulfoxides, or the like; bis(hydroxy diaryl)sulfones, such as 4,4'-dihydroxy diphenyl sulfone, 4,4'-dihydroxy-3,3'-dimethyl diphenyl sulfone, or the like; or combinations including at least one of the foregoing bisphenol compounds.

Other bisphenol compounds that can be utilized in the polycondensation of polycarbonate are represented by the formula (V)

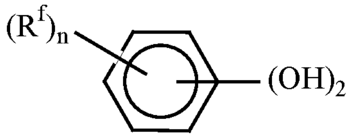

(V)

wherein, $R^f$, is a halogen atom of a hydrocarbon group having 1 to 10 carbon atoms or a halogen substituted hydrocarbon group; n is a value from 0 to 4. When n is at least 2, $R^f$ can be the same or different. Examples of bisphenol compounds that can be represented by the formula (IV), are resorcinol, substituted resorcinol compounds such as 3-methyl resorcin, 3-ethyl resorcin, 3-propyl resorcin, 3-butyl resorcin, 3-t-butyl resorcin, 3-phenyl resorcin, 3-cumyl resorcin, 2,3,4,6-tetrafluoro resorcin, 2,3,4,6-tetrabromo resorcin, or the like; catechol, hydroquinone, substituted hydroquinones, such as 3-methyl hydroquinone, 3-ethyl hydroquinone, 3-propyl hydroquinone, 3-butyl hydroquinone, 3-t-butyl hydroquinone, 3-phenyl hydroquinone, 3-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing bisphenol compounds.

In one aspect, the bisphenol compound is bisphenol A. In an exemplary aspect, the polycarbonate polymer component comprises a bisphenol A polycarbonate polymer. In another exemplary aspect, the polycarbonate component comprises a blend of at least two different grade bisphenol A polycarbonates. To that end, a polycarbonate grade may, for example, be characterized by the melt volume rate (MVR) of the polycarbonate. For example, a disclosed polycarbonate, such as a bisphenol A polycarbonate, may be characterized by exhibiting a melt Volume Rate (MVR) in the range of from 4 g/10 min to 30 g/10 min at 300 °C/1.2 kg. For example, the MVR can range from 10 g/10 min to 25 g/10 min, including for example a MVR in the range of from 15 g/10 min to 20 g/10 min. Further, for example, the MVR can be in the range of from 4 g/10 min or 30 g/10 min.

Polycarbonates may include linear bisphenol-A polycarbonates produced by melt polymerization. The melt polycarbonate process is based on continuous reaction of a dihydroxy compound and a carbonate source in a molten stage. For example, the polycarbonate polymer may be linear bisphenol-A polycarbonates produced by melt polymerization. The melt polycarbonate process is based on continuous reaction of a dihydroxy compound and a carbonate source in a molten stage. A melt polycarbonate in some aspects may have a molecular weight (Mw) of about 15,000 to about 120,000 Daltons according to a polystyrene basis. The melt polycarbonate product may have an endcap level of about 45% to about 80%. Some polycarbonates have an endcap level of about 45% to about 75%, about 55 % to about 75%, about 60% to about 70% or about 60% to about 65%. The polycarbonate may have an endcap level between any two of the foregoing values as endpoints. Certain polycarbonates have at least 200 parts per million (ppm) of hydroxide groups. Certain polycarbonates have 200-1100 ppm or 950 to 1050 ppm hydroxide groups.

The polycarbonate polymer may contain endcapping agents. Any suitable endcapping agents can be used provided that such agents do not significantly adversely impact the desired properties of the polycarbonate composition (transparency, for example). Endcapping agents include mono-phenolic compounds, mono-carboxylic acid chlorides, and/or mono-chloroformates. Mono-phenolic endcapping agents are exemplified by monocyclic phenols such as phenol and $C_1$-$C_{22}$ alkyl-substituted phenols such as p-cumyl-phenol, resorcinol monobenzoate, and p- and tertiary-butyl phenol; and monoethers of diphenols, such as p-methoxyphenol.

Additionally, some polycarbonates include from about 200 to about 2000 ppm, or from about 250 to about 1800

ppm, or from about 300 to about 1500 Fries products. Fries products include ester type of structures A, B, and C.

Apart from the main polymerization reaction in polycarbonate production, there is a series of side reactions consisting of chain rearrangements of the polymer backbone that lead to branching that are often referred to as Fries rearrangement. The Fries species specifically found in bisphenol A melt polycarbonates include the ester type of structures A, B, and C.

Linear Fries:

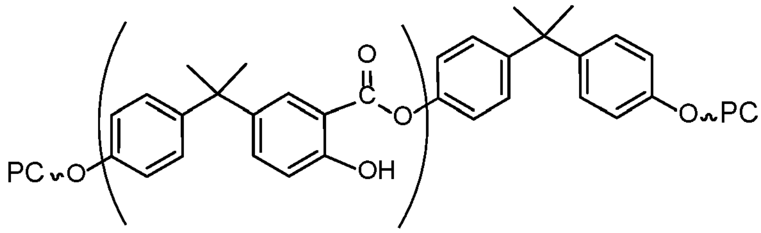

Branched Fries:

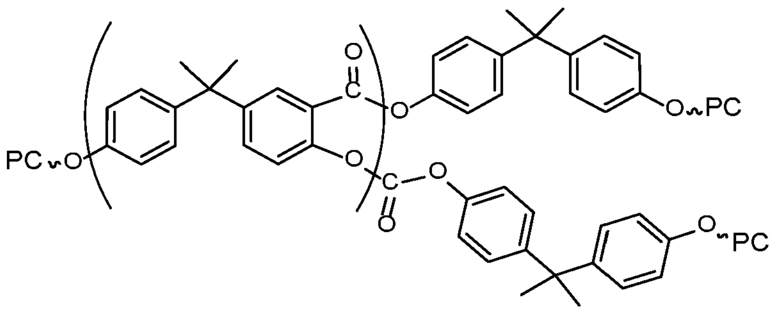

Acid Fries:

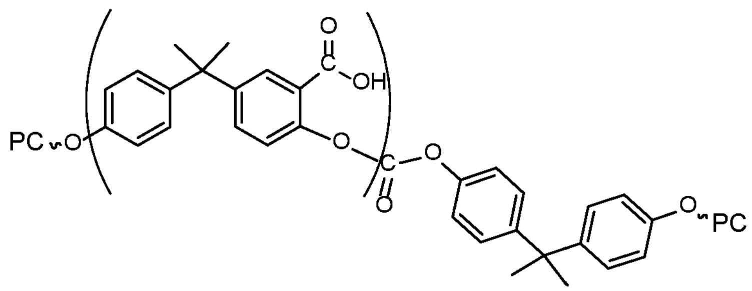

The Fries reaction is induced by the combined effect of basic catalysts, temperature, and residence time, which generally result in melt-produced polycarbonates being branched as compared with the interfacial polycarbonates since their manufacturing temperatures are lower. Because high branching levels in the resin can have a negative effect on the mechanical properties of the polycarbonate (for example, on impact strength), a product with lower branched Fries product may be desirable.

In certain embodiments, polycarbonate produced by interfacial polymerization may be utilized. In some processes, bisphenol A and phosgene are reacted in an interfacial polymerization process. Typically, the disodium salt of bisphenol A is dissolved in water and reacted with phosgene which is typically dissolved in a solvent that not miscible with water (such as a chlorinated organic solvent like methylene chloride).

In some embodiments, the polycarbonate comprises interfacial polycarbonate having a weight average molecular weight of from about 10,000 grams per mole (g/mol) to about 50,000 g/mol preferably about 15,000 g/mol to about 45,000 g/mol. Some interfacial polycarbonates have an endcap level of at least 90% or preferably 95%.

The polycarbonate polymer component may comprise one or more polycarbonate polymers. In at least one aspect, the composition may include at least a first and second polycarbonate as the polycarbonate polymer component. In a further aspect, the polycarbonate polymer may comprise at least one bisphenol-A polycarbonate polymer. Non-limiting examples of the polycarbonate may include homopolymers LEXAN™ 105 and/or LEXAN™ 175, both available from SABIC™ Innovative Plastics. In some compositions, the polycarbonate polymer comprises at least one polycarbonate polymer having a molecular weight (Mw) of less than 25,000 g/mol, for example about 21,800 g/mol, and a second polycarbonate polymer have a molecular weight (Mw) of at least 28,000 g/mol, for example 30,000 g/mol. In some compositions, the molar ratio of said first polycarbonate polymer to said second polycarbonate polymer is from about 7:1 to about 4:1.

Polycarbonates" and "polycarbonate polymers" as used herein can further include blends of polycarbonates with other copolymers comprising carbonate chain units. An exemplary copolymer is a polyester carbonate, also known as a copolyester-polycarbonate. Such copolymers further contain, in addition to recurring carbonate chain units, repeating units of formula (VI)

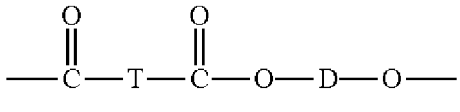

(VI)

wherein D is a divalent radical derived from a dihydroxy compound, and may be, for example, a $C_{2-10}$ alkylene radical, a $C_{6-20}$ alicyclic radical, a $C_{6-20}$ aromatic radical or a polyoxyalkylene radical in which the alkylene groups contain 2 to about 6 carbon atoms, specifically 2, 3, or 4 carbon atoms; and T is a divalent radical derived from a dicarboxylic acid, and may be, for example, a $C_{2-10}$ alkylene radical, a $C_{6-20}$ alicyclic radical, a $C_{6-20}$ alkyl aromatic radical, or a $C_{6-20}$ aromatic radical.

In one aspect, D is a $C_{2-6}$ alkylene radical. In another aspect, D is derived from an aromatic dihydroxy compound of formula (VII):

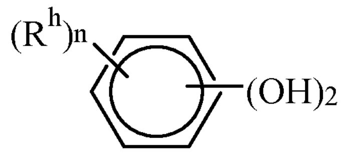

(VII)

wherein each $R^h$ is independently a halogen atom, a $C_{1-10}$ hydrocarbon group, or a $C_{1-10}$ halogen substituted hydrocarbon group, and n is 0 to 4. The halogen is usually bromine. Examples of compounds that may be represented by the formula (VIII) include resorcinol, substituted resorcinol com pounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propylhydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds.

Examples of aromatic dicarboxylic acids that can be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1 ,4-, 1 ,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is about 10:1 to about 0.2:9.8. In another specific aspect, D is a $C_{2-6}$ alkylene radical and T is p-phenylene, m-phenylene, naphthalene, a divalent cycloaliphatic radical, or a mixture thereof. This class of polyester includes the poly(alkylene terephthalates).

In other aspects, poly(alkylene terephthalates) can be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters. Also contemplated are the above polyesters with a minor amount, e.g., from about 0.5 to about 10 percent by weight, of units derived from an aliphatic diacid and/or an aliphatic polyol to make copolyesters.

Copolymers comprising alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly (cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexanedimethanol-1,4-cyclohexanedicarboxylate) (PCCD), having recurring units of formula (IX):

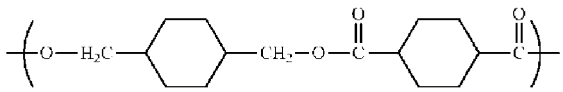

(VIII)

wherein, as described using formula (VIII), D is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

In accordance with the invention the polycarbonate polymer component is present in an amount from 70 wt. % to 99 wt. % of the total weight of the composition. In a further aspect, the polycarbonate polymer is present in an amount from 70 wt. % to about 85 wt. %, or from 70 wt. % to about 90 wt. %, , or from 70 wt. % to about 89 wt. %, or from 70 wt. % to about 88 wt. %, or from 70 wt. % to about 88 wt. %, or from 70 wt. % to about 85 wt. %, or from 70 wt. % to about 80 wt. %, or from 70 wt. % to about 95 wt. %, or from about 75 wt. % to about 95 wt. %, or from about 77 wt. % to about 95 wt. %. In an aspect, the polycarbonate polymer is present in an amount of 70 wt. %.

**GLASS FIBER**

According to the invention, the disclosed compositions comprise a non-bonding glass fiber. In some examples, a non-bonding glass fiber included as a fiber filler in the present disclosure may provide a composition having a higher impact strength than a substantially similar composition comprising a bonding glass fiber. Substantially similar composition may refer to a composition comprising the same components but for a specified component. However, while a non-bonding glass fiber may improve impact strength properties in some of the non-brominated and non-chlorinated flame retardant formulations evaluated herein, the robustness of flame performance for thin-walled applications (less than 1.5 mm or less than 0.8 mm) may be poorer. A combination of the non-bonding glass fiber filler with certain stabilizer additives in the polycarbonate composition may improve both impact strength and maintain flame performance.

A non-bonding glass fiber, also characterized as a non-*binding* glass fiber, may refer to a glass fiber filler that does not provide specific adhesion to a polymer resin to which it is added. That is, individual fibers of the glass fiber filler may not demonstrate an affinity towards the polymer matrix. Comparatively, bonding glass fiber provides specific adhesion with the polymer resin to which it is added. A bonding glass fiber filler may exhibit affinity toward the polycarbonate resin matrix. This affinity may be attributed to the glass sizing, among a number of other forces.

In one aspect, the disclosed compositions comprise a non-bonding glass fiber selected from E-glass, S-glass, AR-glass, T-glass, D-glass and R-glass. In a still further aspect, the non-bonding glass fiber may be selected from E-glass, S-glass, and combinations thereof. In one example, the non-bonding glass fiber is an E-glass or EC glass type.

The non-bonding glass fibers can be made by standard processes, e.g., by steam or air blowing, flame blowing, and mechanical pulling. Exemplary glass fibers for polycarbonate reinforcement are made by mechanical pulling.

The non-bonding glass fibers may be sized or unsized. Sized glass fibers are coated on their surfaces with a sizing composition selected for compatibility with the polycarbonate. The sizing composition facilitates wet-out and wet-through of the polycarbonate upon the fiber strands and assists in attaining desired physical properties in the polycarbonate composition. In various further aspects, the non-bonding glass fiber is sized with a coating agent. In a further aspect, the coating agent is present in an amount from about 0.1 wt% to about 5 wt% based on the weight of the glass fibers. In a still further aspect, the coating agent is present in an amount from about 0.1 wt% to about 2 wt% based on the weight of the glass fibers.

In preparing the non-bonding glass fibers, a number of filaments can be formed simultaneously, sized with the coating agent and then bundled into what is called a strand. Alternatively the strand itself may be first formed of filaments and then sized. The amount of sizing employed is generally that amount which is sufficient to bind the glass filaments

into a continuous strand and ranges from about 0.1 to about 5 wt %, about 0.1 to 2 wt % based on the weight of the glass fibers. Generally, this may be about 1.0 wt % based on the weight of the glass filament.

In a further aspect, the non-bonding glass fiber may be continuous or chopped. In some examples, the glass fiber is chopped. Glass fibers in the form of chopped strands may have a length of about 0.3 millimeter to about 10 centimeters, specifically about 0.5 millimeter to about 5 centimeters, and more specifically about 1.0 millimeter to about 2.5 centimeters. In various further aspects, the glass fiber has a length from about 0.2 mm to about 20 mm. In a yet further aspect, the glass fiber has a length from about 0.2 mm to about 10 mm. In an even further aspect, the glass fiber has a length from about 0.7 mm to about 7 mm. In this area, where a thermoplastic resin is reinforced with glass fibers in a composite form, fibers having a length of about 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

The non-bonding glass fiber component is present in an amount from 0.01 wt.% to 20 wt%. In some examples, the non-bonding glass fiber may be present in an amount from greater than about 5 wt% to about 15 wt%. In a yet further aspect, the non-bonding glass fiber component may be present in an amount from greater than about 5 wt% to about 10 wt%. The disclosed thermoplastic composition may comprise from about 2 wt. % to 20 wt. % of non-bonding glass fiber filler. For example, the glass fiber can be present in an amount of about 10 wt. %. In a still further aspect, the non-bonding glass fiber component may be present in an amount from greater than about 3 wt. % to about 10 wt. % or from about 3 wt. % to about 8 wt. %.

The non-bonding glass fiber may have a round (or circular), flat, or irregular cross-section. Thus, use of non-round fiber cross sections is possible. However, in some examples, the non-bonding glass fiber may have a circular cross-section. The width or diameter of the non-bonding glass fiber may be from about 1 to about 20 $\mu$m, or from about 5 to about 20 $\mu$m. In a further example, the width or diameter of the glass fiber may be from about 5 to about 15 $\mu$m. In certain compositions, the non-bonding glass fiber may have a width or diameter of about 14 $\mu$m.

## FLAME RETARDANT

In certain aspects of the present disclosure, the thermoplastic compositions can comprise a flame retardant additive. The flame retardant additive may comprise a flame retardant material or mixture of flame retardant materials suitable for use in the disclosed polycarbonate compositions. In an example, the flame retardant additive may comprise a phosphate containing material.

In accordance with the invention, the flame retardant additive is free of bromine and/ or chlorine. Free of, or substantially free of, may refer to less than about 1 wt. % or more specifically, less than about 0.1 wt. % present in the total weight of a composition. In certain examples, the polycarbonate is substantially free of bromine or chlorine atoms. In further examples, the flame retardant additive is substantially free of bromine or chlorine atoms. By "substantially free" it is intended that less than about 1 wt. %, or less than about 0.1 wt. %, of the polycarbonate composition comprises bromine and/or chlorine atoms.

Non-bromine/non-chlorine phosphorus-containing flame retardants may include, for example, organic phosphates and organic compounds containing phosphorus-nitrogen bonds. The flame retardant optionally is a non-bromine or non-chlorine based metal salt, e.g., of a monomeric or polymeric aromatic sulfonate or mixture thereof. The metal salt is, for example, an alkali metal or alkali earth metal salt or mixed metal salt. The metals of these groups include sodium, lithium, potassium, rubidium, cesium, beryllium, magnesium, calcium, strontium, francium and barium. Examples of flame retardants include cesium benzenesulfonate and cesium p-toluenesulfonate.

The flame retardant additive may comprise an oligomer organophosphorus flame retardant, including for example, bisphenol A diphenyl phosphate (BPADP). In a further example, the flame retardant can be selected from oligomeric phosphate, polymeric phosphate, oligomeric phosphonate, ammonium polyphosphate (Exolit™ OP) or mixed phosphate/phosphonate ester flame retardant compositions. The flame retardant can be selected from triphenyl phosphate; cresyldiphenylphosphate; tri(isopropylphenyl)phosphate; resorcinol bis(diphenylphosphate); and bisphenol-A bis(diphenyl phosphate). In an aspect, the flame retardant can comprise bisphenol A bis(diphenyl phosphate) (BPDAP).

In some examples, the flame retardant additives may include, for example, flame retardant salts such as alkali metal salts of perfluorinated C1-C16 alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as sodium carbonate $Na_2CO_3$, potassium carbonate $K_2CO_3$, magnesium carbonate $MgCO_3$, calcium carbonate $CaCO_3$, and barium carbonate $BaCO_3$ or fluoro-anion complex such as trilithium aluminum hexafluoride $Li_3AlF_6$, barium silicon fluoride $BaSiF_6$, potassium tetrafluoroborate $KBF_4$, tripotassium aluminum hexafluoride $K_3AlF_6$, potassium aluminum fluoride $KAlF_4$, potassium silicofluoride $K_2SiF_6$, and/or sodium aluminum hexafluoride

$Na_3AlF_6$ or the like. Rimar salt and KSS and NATS (sodium toluene sulfonic acid), alone or in combination with other flame retardants, are particularly useful in the compositions disclosed herein.

Metal synergists, e.g., antimony oxide, may also be used with the flame retardant additive. A flame retardant can be present in amounts of 1 to 25 parts by weight, more specifically 2 to 20 parts by weight, based on 100 parts by weight of the total composition, excluding any filler.

The flame retardant may be present in an amount of from about 0.01 wt. % to about 1 wt. % based on the total weight of the composition. For example, the flame retardant may be present in an amount of from about 0.05 wt. % to about 0.5 wt. %, or from about 0.05 wt. % to about 0.25 wt.% based on the total weight of the composition.

## MINERAL FILLER

Mineral fillers may comprise the disclosed composition. Generally mineral fillers, or fillers, may be selected to impart additional impact strength and/or provide additional characteristics that can be based on the final selected characteristics of the polymer composition. In some aspects, the filler(s) may comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. Aspects of the present disclosure include surface-modified mineral fillers and their unique advantages. Surface-modified as used herein may refer to coated or surface treated mineral fillers.

There are a number of appropriate fillers or reinforcing agents which may include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (atmospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, $TiO_2$, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. Aspects of the present disclosure however examine the synergy among non-bonding glass fiber filler and surface-modified mineral fillers (such as talc and wollastonite) and its effect on non-brominated and/or non-chlorinated flame retardant polycarbonate compositions.

In accordance with the invention, the surface-modified mineral filler comprises a magnesium silicate, commonly referred to as talc. Talc generally comprises magnesium silicate hydrate, such as $Mg_3Si_4O_{10}(OH)_2$, but often includes small amounts (about less than 2 %) of chlorite (a silicate including magnesium, iron, nickel, or manganese), dolomite (calcium magnesium carbonate $CaMg(CO_3)_2$), and magnesite (magnesium carbonate $MgCO_3$). Talc may be characterized as a monoclinic material having a sheet-like crystal structure and a Moh's hardness of 1; compared to mineral filler wollastonite having an acircular structure and a Moh's hardness of 4.5. Talc may have a lamellar, or flaky sheet-like structure having a layer or sheet of magnesium hydroxide ($Mg(OH)_2$) between two sheets of silica ($SiO_2$). Talc has been used in thermoplastic compounds as a mineral filler and may assist in flame retardance by functioning as a barrier to oxygen and increasing viscosity of a molten polymer matrix during combustion. Talc is commercially available from a number of manufacturers.

As an example, the surface-modified talc may be a talc surface treated with a polydimethylsiloxane based solution. The surface-modified talc has a mean particle diameter of from 0.5 nanometers (nm) to 2 micrometers (microns, $\mu$m). In a yet further aspect, the talc filler can have an average particle size from about 0.5 $\mu$m to 2 $\mu$m. In one example, the surface modified talc has an average particle size of about 1.8 $\mu$m. For example, the surface modified talc may comprise Luzenac™ R7, a hydrous magnesium silicate talc coated with a polydimethylsiloxane based solution.

According to the invention, the composition comprises from 0.01 wt. % to 10 wt. % of a surface modified talc. The composition may comprise from 0.01 wt. % to about 8 wt. %, 0.5 wt. % to 10 wt. %, 1 wt. % to 10 wt. %, 0.5 wt. % to about 8 wt. %

## ADDITIVES

The disclosed polycarbonate composition may comprise one or more additional additives conventionally used in the manufacture of molded thermoplastic parts with the proviso that the optional additives do not adversely affect the desired properties of the resulting composition. Mixtures of optional additives can also be used. Such additives can be

mixed at a suitable time during the mixing of the components for forming the composite mixture. For example, the disclosed composition may comprise one or more additional fillers, plasticizers, stabilizers, anti-static agents, impact modifiers, colorant, antioxidant, and/or mold release agents. In one aspect, the composition can further comprises one or more additives selected from an antioxidant, a mold release agent, and stabilizer.

In some aspects, the additive may comprise a heat stabilizer additive. In some aspects the heat stabilizer component includes at least one organophosphorus compound, including but not limited to a phosphite, phosphine or phosphonite compound. In particular aspects, the heat stabilizer component includes tris-(2,4-di-tert-butylphenyl) phosphite (e.g., Irgafos™ 168, available from BASF) (IRG), triphenylphosphine (TPP), tridecylphosphite (TDP), tetrakis(2,4-di-tert-butylphenyl)-4,4-diphenyldiphosphonite) (PEPQ), bis (2,4-dicumylphenyl) pentaerythritol diphosphite (e.g., Doverphos™ S-9228, available from Dover Chemical) (DP), diphenyl monodecyl phosphite (DPDP), or combinations thereof.

In some aspects the phosphorous based stabilizer component is present in the molded article in an amount of from about 0.01 to about 0.2 wt % of the composition, or in certain aspects in an amount of from about 0.01 to about 0.08 wt % of the composition.

An acid stabilizer component in some aspects may be present in the disclosed composition. Other acid stabilizer additives may include organophosphorus compounds, including but not limited to phosphorous acid, phosphoric acid, or a combination thereof.

The composition may comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler.

The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

In further aspects, the disclosed composition can comprise antistatic agents. These antistatic agents can include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing can be used in a polymeric resin containing chemical antistatic agents to render the composition electrostatically dissipative.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB™ 5411);

2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof, e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An anti drip agent, such as TSAN, can be used in amounts of 0.1 to 10 parts by weight, based on 100 parts by weight of the total composition, excluding any filler.

Additionally, additives to improve flow and other properties may be added to the composition, such as low molecular weight hydrocarbon resins. These materials are also known as process aids. Particularly useful classes of low molecular weight hydrocarbon resins are those derived from petroleum $C_5$ to $C_9$ feedstock that are derived from unsaturated $C_5$ to $C_9$ monomers obtained from petroleum cracking. Non-limiting examples include olefins, e.g. pentenes, hexenes, heptenes and the like; diolefins, e.g. pentadienes, hexadienes and the like; cyclic olefins and diolefins, e.g. cyclopentene, cyclopentadiene, cyclohexene, cyclohexadiene, methyl cyclopentadiene and the like; cyclic diolefin dienes, e.g., dicyclopentadiene, methylcyclopentadiene dimer and the like; and aromatic hydrocarbons, e.g. vinyltoluenes, indenes, methylindenes and the like. The resins can additionally be partially or fully hydrogenated.

## PROPERTIES AND ARTICLES

The polycarbonate compositions described herein may be used to form robust flame retardant having improved multi-axial impact strength and notched impact strength.

In certain aspects of the present disclosure, the combination of a polycarbonate composition, a non-bromine or non-chlorine flame retardant, a non-bonding glass fiber filler, and surface modified talc may further improve mechanical properties, such as multi-axial impact strength, while maintaining flame retardant performance when compared to a substantially similar composition.

Surface-modified talc may provide a higher impact strength (both MAI and notched Izod) than a non-coated talc mineral filler but for the identity of the talc filler (or, but for the surface characteristics of the talc mineral filler). In various aspects of the present disclosure, the surface-modified talc may provide a composition exhibiting higher MAI strength values and shorter flame out times than a substantially similar composition consisting essentially of the same components, but for the absence of surface-modified talc and the presence of surface modified wollastonite. Surprisingly, compositions of the present disclosure combine surface-modified talc with impact strength properties afforded by non-bonding glass fiber to provide polycarbonate compositions having improved multi-axial impact strength and notched impact strength as well as robust flame retardant performance. Compositions of the present disclosure reveal a synergy between a non-bonding glass fiber filler and a surface-modified talc mineral filler.

A disclosed composition comprising non-bonding glass fiber and a surface-modified talc may exhibit higher MAI strength values tested in accordance with ISO6603 and shorter flame out times (FOT) tested in accordance UL 94 when compared to a substantially similar composition comprising a non-coated, fine talc or a high aspect ratio talc. A non-coated, fine talc as used herein refers to a talc having an average particle size of from about 0.5 micrometers ($\mu$m) to about 15 $\mu$m, including from about 0.8 $\mu$m to about 5 $\mu$m, or from about 1 $\mu$m to about 3.3 $\mu$m. and wherein its surface has not been coated or subjected to a treatment to modify properties of the talc particles. A high aspect ratio talc refers to a talc wherein the dimensions of the talc have a high aspect ratio. As an example, a high aspect ratio talc may have a ratio of the greatest length of a talc particle to its thickness at greater than 20:1. Here, a substantially similar composition comprising a fine talc or a higher aspect ratio talc bonding glass fiber filler may refer to a composition comprising at least the polycarbonate component, the high aspect ratio talc or the fine talc, in the absence of the surface-modified talc. A ratio of surface-modified talc to non-bonding glass fiber in the present disclosure may be from about 1:4 to about 3:1,

or more specifically, from about 1:2 to about 2:1. In an example, a ratio of surface-modified talc to non-bonding glass fiber may be about 1:1.

In further aspects, compositions of the present disclosure exhibit a synergy between a non-bonding glass fiber and a surface-modified mineral filler such as surface-modified talc. For example, a disclosed composition comprising non-bonding glass fiber and a surface-modified talc may exhibit higher MAI strength values tested in accordance with ISO6603 and shorter flame out times (FOT) when tested in accordance UL 94 when compared to a substantially similar composition comprising a non-coated, fine talc or a high aspect ratio talc.

In specific examples, non-bonding glass fiber, a non-bromine/non-chlorine FR (Rimar salt), and a surface-modified talc have been combined to provide a polycarbonate composition exhibiting improved MAI strength, improved notched impact strength, and robust flame retardant performance. More specifically, the disclosed compositions exhibited an MAI energy at max force of 70 Joules (J) or greater at 23 °C when tested in accordance with ISO 6603, an impact strength of 12 kilojoules per square meter ($kJ/m^2$) or greater when tested in accordance with ISO 6603, and a flame out time (FOT) of less than 50 seconds and 0 % burning drips for 0.8 mm molded samples when tested in accordance with UL 94.

The properties of the disclosed polycarbonate compositions make them useful in a number of applications. The polycarbonate compositions may be particularly useful in applications where: thin-walled (less than 1 mm) flame retardancy, thin-walled notched impact strength, thin-walled multi-axial impact strength, and bromine-free/chlorine-free formulations are desired. Thus the disclosed polycarbonate composition may be useful for electrical applications such as use as electrical device enclosures. The improved thin-walled MAI strength of the present disclosure may be even more useful for electrical device enclosures. MAI strength However, the disclosed polycarbonate compositions are not limited to the foregoing uses. The advantageous mechanical characteristics of the polycarbonate compositions disclosed herein can make them appropriate for an array of uses and the compositions may be used to provide any desired shaped, formed, or molded articles.

Suitable articles can be exemplified by, but are not limited to, aircraft and automotive vehicles, light fixtures and appliances, solar appliances; and like applications. The disclosure further contemplates additional fabrication operations on said articles, such as, but not limited to, molding, in-mold decoration, baking in a paint oven, lamination, and/or thermoforming. The articles made from the composition of the present disclosure may be used widely in automotive industry, home appliances, electrical components, and telecommunications.

In certain aspects, the present disclosure further relates to electrical or electronic devices comprising the thermoplastic compositions described herein. In a further aspect, the electrical or electronic device comprising the disclosed thermoplastic compositions may be a cellphone, a MP3 player, a computer, a laptop, a camera, a video recorder, an electronic tablet, a pager, a hand receiver, a video game, a calculator, circuit boards, a wireless car entry device, wireless devices, audio devices, scanner fax devices, an automotive part, a filter housing, a luggage cart, an office chair, a kitchen appliance, a display screen or film, an electrical housing or enclosure, an electrical connector, a lighting fixture, a light emitting diode, an electrical part, or a telecommunications part, among many others.

In a still further aspect, the thermoplastic compositions can also be present in overlapping fields, such as mechatronic systems that integrate mechanical and electrical properties which can, for example, be used in automotive or medical engineering.

In various aspects, the present disclosure relates to articles comprising the compositions herein. The compositions may be molded into useful shaped articles by a variety of means such as injection molding, extrusion, rotational molding, blow molding and thermoforming to form articles. The thermoplastic compositions can be useful in the manufacture of articles requiring materials with thin wall flame retardancy and good impact strength.

In various aspects, the polycarbonate compositions may be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, the following: co-rotating and counter-rotating extruders, single screw extruders, co-kneaders, disc-pack processors and various other types of extrusion equipment. In a further aspect, the extruder is a twin-screw extruder. In various further aspects, the composition may processed in an extruder at temperatures from about 180 °C to about 350 °C.

In a further aspect, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed compositions can be used to form articles such as printed circuit board carriers, burn in test sockets, flex brackets for hard disk drives, and the like.

EXAMPLES

Detailed embodiments of the present disclosure are disclosed herein; it is to be understood that the disclosed embodiments are merely exemplary of the disclosure that may be embodied in various forms. Therefore, specific structural and functional details disclosed herein are not to be interpreted as limits, but merely as a basis for teaching one skilled in the art to employ the present disclosure. The specific examples below will enable the disclosure to be better understood. However, they are given merely by way of guidance and do not imply any limitation.

The following examples are provided to illustrate the compositions, processes, and properties of the present disclosure. The examples are merely illustrative and are not intended to limit the disclosure to the materials, conditions, or process parameters set forth therein.

***General Materials and Methods***

The compositions as set forth in the Examples below were prepared from the components described below. Table 1 presents types of polymers, glass fiber filler, and mineral filler used.

Table 1: Components of the compositions.

| Name/Source | Description | Supplier |
|---|---|---|
| LEXAN™ 105 | Polycarbonate derived from bisphenol A (30,000 Mw); Linear Bisphenol A Polycarbonate homopolymer, produced via interfacial polymerization, Mw of about 30,000 g/mol as determined by GPC using polycarbonate standards, para- cumylphenol (PCP) end-capped | SABIC-IP |
| LEXAN™ 175 | Polycarbonate derived from bisphenol A (21,800 Mw); Linear Bisphenol A Polycarbonate homopolymer, produced via interfacial polymerization, Mw of about 21,800 g/mol as determined by GPC using polycarbonate standards, para- cumylphenol (PCP) end-capped | SABIC-IP |
| Non-bonding GF (CS108F-14P) | Non-bonding glass fiber; silicon dioxide ($SiO_2$); boron free E-glass/E-CR | 3B |
| Rimar salt FR (Bayowet™ C4) | Potassium perfluorobutanesulfonate (Rimar); flame retardant additive | Laxess |
| TSAN | Styrene acrylonitrile encapsulated polytetrafluoroethylene (PTFE); 50%PTFE and 50%SAN | SABIC-IP |
| $H_3PO_3$(acid) | $H_3PO_3$ solution (45% in water); phosphorous acid | Quaron |
| PETS | Pentaerythritol tetrastearate (PETS); greater than 90% esterified | Faci |
| Irgafos™ 168 | Tris(2,4-di-tert-butylphenyl) phosphite; antioxidant | Ciba |
| Cyasorb™ UV5411 | 2-(2 hydroxy-5-t-octylphenyl) benzotriazole; UV | Cytec industries |
| LEXAN™ 105 | Polycarbonate derived from bisphenol A (30,000 Mw); Linear Bisphenol A Polycarbonate homopolymer, produced via interfacial polymerization, Mw of about 30,000 g/mol as determined by GPC using polycarbonate standards, para- cumylphenol (PCP) end-capped | SABIC-IP |
| LEXAN™ 175 | Polycarbonate derived from bisphenol A (21,800 Mw); Linear Bisphenol A Polycarbonate homopolymer, produced via interfacial polymerization, Mw of about 21,800 g/mol as determined by GPC using polycarbonate standards, para- cumylphenol (PCP) end-capped | SABIC-IP |
| | absorber | |
| Fine talc (Jetfine 3CA) | Magnesium silicate hydrate (talc); particle size about 1 $\mu$m to about 3.3 $\mu$m. | Luzenac |
| Coated talc (Luzenac™ R7) | Hydrous magnesium silicate (talc); coated with polydimethylsiloxane based solution | Luzenac |

(continued)

| Name/Source | Description | Supplier |
|---|---|---|
| HAR Talc (Luzenac™ HAR W92) | Hydrous magnesium silicate (talc); high aspect ratio (HAR) talc | Luzenac |
| Coated wollastonite (Nyglos™ 12) | COATED Calcium silicate ($CaSiO_3$); D50 = 18 μm; Average fiber length = about 234 μm; tapped bulk density = 0.57 grams per cubic centimeter ($g/cm^3$) | NYCO Minerals, Inc. |
| Wollastonite (Nyglos™ 4W10992) | Calcium silicate ($CaSiO_3$); D50 = 7 μm; Average fiber length = about 63 μm; tapped bulk density = 0.35 $g/cm^3$ | NYCO Minerals, Inc. |

Extrusion for all formulations was performed on a 25 mm twin screw extruder (Krupps Werner and Plefeiderer), according to the extrusion profile indicated in **Table 3.** All powders were blended using a paint shaker and fed through one feeder. The remaining PC was fed through a second feeder. The glass fibers were fed separately through a downstream side-feeder. The extrudate was cooled using a water bath prior to pelletizing.

**Table 3.** Compounding Settings

| Extruder | | |
|---|---|---|
| Die | mm | |
| Zone 1 Temp | °C | 180 |
| Zone 2 Temp | °C | 250 |
| Zone 3 Temp | °C | 270 |
| Zone 4 Temp | °C | 285 |
| Zone 5 Temp | °C | 285 |
| Zone 6 Temp | °C | 285 |
| Zone 7 Temp | °C | 285 |
| Zone 8 Temp | °C | 285 |
| Zone 9 Temp | °C | 285 |
| Die Temp | °C | 285 |
| Screw speed | rpm | 300 |
| Throughput | kg/hr | 18 |

The pellets obtained from extrusion were dried at 100 °C for two hours. Molding of 3mm ISO parts (Izod bars, plaques) of UL bars was performed on an Engel™ 75T molding machine.. The injection molding parameters are set forth in Table 4.

**Table 4.** Injection molding settings.

| Molding Machine | | |
|---|---|---|
| Cnd: Pre-drying time | Hour | -2 |
| Cnd: Pre-drying temp | °C | 120 |
| Hopper temp | °C | 40 |
| Zone 1 temp | °C | 280 |
| Zone 2 temp | °C | 290 |
| Zone 3 temp | °C | 300 |

(continued)

| Molding Machine | | |
|---|---|---|
| Nozzle temp | °C | 295 |
| Mold temp | °C | 90 |
| Screw speed | rpm | 100 |
| Back pressure | bar | 5 |

Molded samples were then tested in accordance with the standards presented below.

The notched Izod impact ("NII") test was carried out on 80 mm x 10 mm x 3 mm molded samples (bars) with notch, according to ISO180 at 0 °C, -30°C and 23 °C. Data units are $kJ/m^2$..

Multi-axial impact (MAI) strength testing was performed according to ISO 6603 at 23 °C 0 °C, -30 °C, on disk specimens having a 100 mm diameter and a thickness of 3.2 mm with a speed of 4.4 meters per second (m/s).

Flammability tests were performed following the procedure of Underwriter's Laboratory Bulletin 94 entitled "Tests for Flammability of Plastic Materials, UL 94". Several ratings can be applied based on the rate of burning, time to extinguish, ability to resist dripping, and whether or not drips are burning.

Specimens for testing were injection molded comprising of the injection molded thermoplastic composition. Each specimen had a thickness of either 0.8 mm, 1.5 mm or 3 mm. Materials can be classified according to this procedure as UL 94 HB (horizontal burn), V0, V1, V2, 5VA and/or 5VB on the basis of the test results obtained for five samples.

V0: In a sample placed so that its long axis is 180 degrees to the flame, the period of flaming and/or smoldering after removing the igniting flame does not exceed ten (10) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 50 seconds.

V1: In a sample placed so that its long axis is 180 degrees to the flame, the period of flaming and/or smoldering after removing the igniting flame does not exceed thirty (30) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 250 seconds.

V2: In a sample placed so that its long axis is 180 degrees to the flame, the average period of flaming and/or smoldering after removing the igniting flame does not exceed thirty (30) seconds, but the vertically placed samples produce drips of burning particles that ignite cotton. Five bar flame out time is the flame out time for five bars, each lit twice, in which the sum of time to flame out for the first (t1) and second (t2) ignitions is less than or equal to a maximum flame out time (t1+t2) of 250 seconds.

Flame-out-times may be as analyzed and described in US 6,308,142 B1, the disclosure of which is incorporated by this reference in its entirety. Generally, the data may be analyzed by calculation of the average flame out time (avFOTsec).

Samples were evaluated for the effect of the different types of glass fiber on impact strength properties and flame retardant properties. Results are presented in Table 5.

Table 5. Thermoplastic composition with glass fiber and mineral filler.

| Description | Unit | CE1 | CE2 | CE3 | CE4 | Ex5 | Ex6 | Ex7 | CE8 | CE9 | CE 10 |
|---|---|---|---|---|---|---|---|---|---|---|---|
| **PC 175** | % | 11.74 | 11.74 | 11.74 | 11.74 | 11.74 | 11.74 | 11.74 | 11.74 | 11.74 | 11.74 |
| **PC 105** | % | 77.79 | 79.51 | 76.94 | 75.12 | 79.51 | 76.94 | 75.12 | 76.94 | 76.94 | 76.94 |
| **Tris(di-t-butylphenyl) phosphite** | % | 0.05 | 0.05 | 0.05 | 0.05 | 0.05 | 0.05 | 0.05 | 0.05 | 0.05 | 0.05 |
| **UVA 5411** | % | 0.15 | 0.15 | 0.15 | 0.15 | 0.15 | 0.15 | 0.15 | 0.15 | 0.15 | 0.15 |
| **PETS (>90% esterified)** | % | 0.27 | 0.27 | 0.27 | 0.27 | 0.27 | 0.27 | 0.27 | 0.27 | 0.27 | 0.27 |
| **RIMAR Salt** | % | 0.2 | 0.2 | 0.2 | 0.2 | 0.2 | 0.2 | 0.2 | 0.2 | 0.2 | 0.2 |

(continued)

| Description | | Unit | CE1 | CE2 | CE3 | CE4 | Ex5 | Ex6 | Ex7 | CE8 | CE9 | CE 10 |
|---|---|---|---|---|---|---|---|---|---|---|---|---|
| Encapsulated PTFE | | % | 0.5 | 0.5 | 0.5 | 0.5 | 0.5 | 0.5 | 0.5 | 0.5 | 0.5 | 0.5 |
| H3PO3, 45% in H2O | | % | 0 | 0.08 | 0.15 | 0.3 | 0.08 | 0.15 | 0.3 | 0.15 | 0.15 | 0.15 |
| Fine Talc | | % | 0 | 2.5 | 5 | 6.67 | 0 | 0 | 0 | 0 | 0 | 0 |
| Coated Talc R7 | | % | 0 | 0 | 0 | 0 | 2.5 | 5 | 6.67 | 0 | 0 | 0 |
| Wollastonite 4W 10992 | | % | 0 | 0 | 0 | 0 | 0 | 0 | 0 | 5 | 0 | 0 |
| Luzenac HAR W92 | | % | 0 | 0 | 0 | 0 | 0 | 0 | 0 | 0 | 0 | 0 |
| Nyglos 12 - coated (10992) | | % | 0 | 0 | 0 | 0 | 0 | 0 | 0 | 0 | 0 | 5 |
| Non-bonding GF | | % | 9.3 | 5 | 5 | 5 | 5 | 5 | 5 | 5 | 5 | 5 |
| MAI | Energy at max force 23°C | J | 42 | 56 | 59 | 63 | 75 | 70 | 75 | 60 | 68 | 66 |
| | Energy at max force 0°C | J | 42 | 65 | 54 | 37 | 54 | 55 | 55 | 37 | 51 | 58 |
| | Energy at max force -30°C | J | 35 | 43 | 18 | 10 | 40 | 14 | 19 | 18 | 12 | 37 |
| 3mm NI (ISO) | Impact 23°C | $kJ/m^2$ | 8 | 10 | 13 | 12 | 12 | 17 | 15 | 9 | 12 | 10 |
| | Impact 0°C | $kJ/m^2$ | 8 | 9 | 10 | 10 | 10 | 10 | 10 | 8 | 10 | 9 |
| | Impact -30°C | $kJ/m^2$ | 7 | 7 | 8 | 9 | 8 | 8 | 9 | 7 | 8 | 7 |
| 0.8mm Vx | FOT 23°C; 48h | s | 62.1 | 42.8 | 39.9 | 49.7 | 40.1 | 38.1 | 46.9 | 41.2 | 29.4 | 42.0 |
| | Dripping 23°C; 48h | - | 0% | 0% | 0% | 0% | 0% | 0% | 0% | 0% | 0% | 0% |
| | V rating 23°C; 48h | - | V1 | V1 | V1 | V1 | V1 | V0 | V0 | 0.89 | 0.99 | 0.76 |

(continued)

| Description | | Unit | CE1 | CE2 | CE3 | CE4 | Ex5 | Ex6 | Ex7 | CE8 | CE9 | CE 10 |
|---|---|---|---|---|---|---|---|---|---|---|---|---|
| 1.5mm Vx | FOT 23°C; 48h | s | 41.2 | 14.6 | 19.0 | 21.6 | 12.9 | 17.7 | 18.7 | 22.7 | 17.1 | 20.5 |
| | Dripping 23°C; 48h | - | 0% | 0% | 0% | 0% | 0% | 0% | 0% | 0% | 0% | 0% |
| | pFTP (V0) 23°C; 48h | - | V0 | V0 | V0 | V0 | V0 | V0 | V0 | V0 | V0 | V0 |

Example 5 (Ex5), Example 6 (Ex6), and Example 7 (Ex7) exhibit the highest values for MAI energy at max force and notched Izod impact strength among all samples observed. Ex5, Ex6, and Ex7 each exhibit lower FOT values for their respective counterparts comprising fine talc, i.e. Comparative example 2 (CE2), Comparative Example 3 (CE3), and Comparative Example 4 (CE4). Comparative Example 9 (CE9) having the high aspect ratio talc also exhibited higher MAI and lower FOT than its fine talc counterpart (CE3), but the NII strength values were lower than for its coated talc counterpart Ex5.

The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

While aspects of the present disclosure can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

It is also to be understood that the terminology used herein is for the purpose of describing particular aspects only and is not intended to be limiting. As used in the specification and in the claims, the term "comprising" may include the aspects "consisting of" and "consisting essentially of." Unless defined otherwise, all technical and scientific terms used herein have the same meaning as commonly understood by one of ordinary skill in the art to which this disclosure belongs.

As used in the specification and the appended claims, the singular forms "a," "an" and "the" include plural referents unless the context clearly dictates otherwise. Thus, for example, reference to "a polycarbonate" includes mixtures of two or more such polycarbonates. Furthermore, for example, reference to a filler includes mixtures of two or more such fillers.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. A value modified by a term or terms, such as "about" and "substantially," is intended to include the degree of error associated with measurement of the particular quantity based upon the equipment available at the time of filing this application. It will be further understood that the endpoints of each

of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" mean that the subsequently described event, condition, component, or circumstance may or may not occur, and that the description includes instances where said event or circumstance occurs and instances where it does not.

Disclosed are component materials to be used to prepare disclosed compositions as well as the compositions themselves to be used within methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

Compounds disclosed herein are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this disclosure belongs.

As used herein, the terms "number average molecular weight" or "Mn" can be used interchangeably, and refer to the statistical average molecular weight of all the polymer chains in the sample and is defined by the formula:

$$Mn = \frac{\sum N_i M_i}{\sum N_i},$$

where $M_i$ is the molecular weight of a chain and Ni is the number of chains of that molecular weight. Mn can be determined for polymers, such as polycarbonate polymers or polycarbonate-polysiloxane copolymers, by methods well known to a person having ordinary skill in the art.

As used herein, the terms "weight average molecular weight" or "Mw" can be used interchangeably, and are defined by the formula:

$$Mw = \frac{\sum N_i {M_i}^2}{\sum N_i M_i},$$

where Mi is the molecular weight of a chain and Ni is the number of chains of that molecular weight. Compared to Mn, Mw takes into account the molecular weight of a given chain in determining contributions to the molecular weight average. Thus, the greater the molecular weight of a given chain, the more the chain contributes to the Mw. It is to be understood

that as used herein, Mw is measured by gel permeation chromatography. In some cases, Mw can be measured by gel permeation chromatography and calibrated with polycarbonate standards. As an example, a polycarbonate of the present disclosure can have a weight average molecular weight of greater than about 5,000 Daltons based on PS standards. As a further example, the polycarbonate can have an Mw of from about 20,000 to about 100,000 Daltons.

## Claims

1. A composition comprising:

   from 70 wt. % to 99 wt. % of a polycarbonate polymer component;
   from 0.01 wt. % to 1 wt. % of a flame retardant additive, wherein the flame retardant additive is free of bromine and/or chlorine; and
   from 0.01 wt. % to 20 wt. % of a non-bonding glass fiber;
   from 0.01 wt. % to 10 wt. % of a surface modified talc, wherein the surface modified talc has a mean particle diameter of from 0.5 nanometer (nm) to 2 micrometer (μm); and
   wherein a molded sample formed from the composition exhibits a multi-axial impact (MAI) rating energy at max force of 70 Joules or greater at 23 degrees Celsius (°C) when tested in accordance with IS06603 standard and wherein a molded sample of the composition achieves a V2 rating at a thickness of 0.8 mm and a flame out time of less than 50 seconds when tested in accordance UL94.

2. The composition of claim 1, wherein the surface modified talc comprises a talc surface treated with a polydimethylsiloxane based solution.

3. The composition of any one of claims 1-2, wherein the surface modified talc has a mean particle diameter of 1.8 μm.

4. The composition of any one of claims 1-3, wherein a ratio of surface-modified talc to glass fiber is from 1:4 to 3:1.

5. The composition of any one of claims 1-3, wherein a ratio of surface-modified talc to glass fiber is from 1:2 to 2:1.

6. The composition of any one of claims 1-3, wherein a ratio of surface-modified talc to glass fiber is 1:2.

7. The composition of any one of claims 1-3, wherein a ratio of surface-modified talc to glass fiber is 1:1.

8. The composition of any one of claims 1-7, further comprising one or more additives.

9. The composition of claim 8, wherein the one or more additives comprise a plasticizer, an anti-static agent, an impact modifier, a colorant, an antioxidant, a mold release agent, an UV absorber, a lubricant, or a blowing agent, or a combination thereof.

10. The composition of any one of claims 1-9, wherein the non-bonding glass fiber has a width of from 10 μm to 15 μm.

11. The composition of any one of claims 1-10, wherein the non-bonding glass fiber has a length of from 2 millimeter (mm) to 6 mm.

12. The composition of any one of claims 1-11, wherein the non-bonding glass fiber has a diameter or a width of 13 μm and a length of 4 mm.

13. The composition of any one of claims 1-12, wherein the flame retardant additive comprises potassium perfluorobutanesulfonate.

14. The composition of any of one of claims 1-13, wherein the polycarbonate polymer component comprises one or more polycarbonate polymers derived from bisphenol A.

15. The composition of any one of claims 1-14, further comprising a phosphorous acid or a phosphite-based stabilizer.

## Patentansprüche

1. Zusammensetzung, umfassend:

   70 Gew.-% bis 99 Gew.-% einer Polycarbonatpolymerkomponente;
   0,01 Gew.-% bis 1 Gew.-% eines Flammschutzadditivs, wobei das Flammschutzadditiv frei von Brom und/oder Chlor ist; und
   0,01 Gew.-% bis 20 Gew.-% einer nichtbindenden Glasfaser;
   0,01 Gew.-% bis 10 Gew.-% eines oberflächenmodifizierten Talks, wobei der oberflächenmodifizierte Talk einen mittleren Teilchendurchmesser von 0,5 Nanometer (nm) bis 2 Mikrometer (pm) aufweist; und wobei eine aus der Zusammensetzung gebildete geformte Probe eine Energiebewertung bei multiaxialem Schlag (Multi-Axial Impact, MAI) bei maximaler Kraft von 70 Joule oder mehr bei 23 Grad Celsius (°C) bei Prüfung gemäß der Norm ISO 6603 zeigt und wobei eine geformte Probe der Zusammensetzung bei einer Dicke von 0,8 mm und einer Nachbrennzeit von weniger als 50 Sekunden bei Prüfung gemäß UL94 erreicht.

2. Zusammensetzung nach Anspruch 1, wobei der oberflächenmodifizierte Talk einen mit einer auf Polydimethylsiloxan basierenden Lösung oberflächenbehandelten Talk umfasst.

3. Zusammensetzung nach einem der Ansprüche 1-2, wobei der oberflächenmodifizierte Talk einen mittleren Teilchendurchmesser von 1,8 μm aufweist.

4. Zusammensetzung nach einem der Ansprüche 1-3, wobei das Verhältnis von oberflächenmodifiziertem Talk zu Glasfaser 1:4 bis 3:1 beträgt.

5. Zusammensetzung nach einem der Ansprüche 1-3, wobei das Verhältnis von oberflächenmodifiziertem Talk zu Glasfaser 1:2 bis 2:1 beträgt.

6. Zusammensetzung nach einem der Ansprüche 1-3, wobei das Verhältnis von oberflächenmodifiziertem Talk zu Glasfaser 1:2 beträgt.

7. Zusammensetzung nach einem der Ansprüche 1-3, wobei das Verhältnis von oberflächenmodifiziertem Talk zu Glasfaser 1:1 beträgt.

8. Zusammensetzung nach einem der Ansprüche 1-7, ferner umfassend ein oder mehrere Additive.

9. Zusammensetzung nach Anspruch 8, wobei das eine oder die mehreren Additive einen Weichmacher, ein Antistatikum, einen Schlagzähigkeitsmodifikator, ein Farbmittel, ein Antioxidans, ein Formtrennmittel, einen UV-Absorber, ein Schmiermittel oder ein Treibmittel oder eine Kombination davon umfassen.

10. Zusammensetzung nach einem der Ansprüche 1-9, wobei die nichtbindende Glasfaser eine Breite von 10 μm bis 15 μm aufweist.

11. Zusammensetzung nach einem der Ansprüche 1-10, wobei die nichtbindende Glasfaser eine Länge von 2 Millimeter (mm) bis 6 mm aufweist.

12. Zusammensetzung nach einem der Ansprüche 1-11, wobei die nichtbindende Glasfaser einen Durchmesser oder eine Breite von 13 μm und eine Länge von 4 mm aufweist.

13. Zusammensetzung nach einem der Ansprüche 1-12, wobei das Flammschutzadditiv Kaliumperfluorbutansulfonat umfasst.

14. Zusammensetzung nach einem der Ansprüche 1-13, wobei die Polycarbonatpolymerkomponente eine oder mehrere von Bisphenol A abgeleitete Polycarbonatpolymere umfasst.

15. Zusammensetzung nach einem der Ansprüche 1-14, ferner umfassend einen Stabilisator auf Basis von phosphoriger Säure oder Phosphit.

## Revendications

1. Composition comprenant :

   de 70 % en poids à 99 % en poids d'un composant de type polymère de type polycarbonate ;
   de 0,01 % en poids à 1 % en poids d'un additif de retardateur de flamme, l'additif de retardateur de flamme étant exempt de brome et/ou de chlore ; et
   de 0,01 % en poids à 20 % en poids d'une fibre de verre non liante ;
   de 0,01 % en poids à 10 % en poids d'un talc modifié en surface, le talc modifié en surface ayant un diamètre moyen de particule allant de 0,5 nanomètre (nm) à 2 micromètres (pm) ; et
   un échantillon moulé formé à partir de la composition présentant une énergie nominale d'impact multi-axial (MAI) à la force maximale de 70 Joules ou plus à 23 degrés Celsius (°C) lorsqu'il est testé conformément à la norme ISO6603 et un échantillon moulé de la composition atteignant un score V2 à une épaisseur de 0,8 mm et un temps d'extinction de moins de 50 secondes lorsqu'il est testé conformément à la norme UL94.

2. Composition selon la revendication 1, le talc modifié en surface comprenant un talc traité en surface par une solution à base de polydiméthylsiloxane.

3. Composition selon l'une quelconque des revendications 1 et 2, le talc modifié en surface ayant un diamètre moyen de particule de 1,8 $\mu$m.

4. Composition selon l'une quelconque des revendications 1 à 3, un rapport de talc modifié en surface sur fibre de verre étant de 1 : 4 à 3 : 1.

5. Composition selon l'une quelconque des revendications 1 à 3, un rapport de talc modifié en surface sur fibre de verre étant de 1 : 2 à 2 : 1.

6. Composition selon l'une quelconque des revendications 1 à 3, un rapport de talc modifié en surface sur fibre de verre étant de 1 : 2.

7. Composition selon l'une quelconque des revendications 1 à 3, un rapport de talc modifié en surface sur fibre de verre étant de 1 : 1.

8. Composition selon l'une quelconque des revendications 1 à 7, comprenant en outre un ou plusieurs additifs.

9. Composition selon la revendication 8, l'additif ou les additifs comprenant un plastifiant, un agent antistatique, un modificateur d'impact, une matière colorante, un antioxydant, un agent de démoulage, un absorbeur d'UV, un lubrifiant, ou un agent de gonflement, ou une combinaison correspondante.

10. Composition selon l'une quelconque des revendications 1 à 9, la fibre de verre non liante ayant une largeur allant de 10 $\mu$m à 15 $\mu$m.

11. Composition selon l'une quelconque des revendications 1 à 10, la fibre de verre non liante ayant une longueur allant de 2 millimètres (mm) à 6 mm.

12. Composition selon l'une quelconque des revendications 1 à 11, la fibre de verre non liante ayant un diamètre ou une largeur de 13 $\mu$m et une longueur de 4 mm.

13. Composition selon l'une quelconque des revendications 1 à 12, l'additif de retardateur de flamme comprenant du perfluorobutanesulfonate de potassium.

14. Composition selon l'une quelconque des revendications 1 à 13, le composant de type polymère de type polycarbonate comprenant un ou plusieurs polymères de type polycarbonate issus de bisphénol A.

15. Composition selon l'une quelconque des revendications 1 à 14, comprenant en outre un acide phosphoreux ou un stabilisant à base de phosphite.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130131241 A
- US 20090111943 A
- US 20140200303 A
- US 7786246 B
- US 6308142 B1